Europäisches Patentamt

European Patent Office

Office européen des brevets

(19)

(11) Veröffentlichungsnummer: **0 392 395**

**A1**

(12) **EUROPÄISCHE PATENTANMELDUNG**

(21) Anmeldenummer: **90106664.7**

(22) Anmeldetag: **06.04.90**

(51) Int. Cl.⁵: **B01D 71/40, C12H 1/00, C12C 9/08**

(30) Priorität: **10.04.89 DE 3911697**

(43) Veröffentlichungstag der Anmeldung:
**17.10.90 Patentblatt 90/42**

(84) Benannte Vertragsstaaten:
**AT BE CH DE DK ES FR GB GR IT LI LU NL SE**

(71) Anmelder: **Gessner & Co. GmbH**
**Postfach 1140**
**D-8206 Bruckmühl/Mangfall 1(DE)**

(72) Erfinder: **Heininger, Hans-Ulrich, Dr.**
**Amselweg 11**
**D-8213 Aschau(DE)**
Erfinder: **Munninger, Wilhelm, Dr.**
**Rosenheimer Strasse 5/5**
**D-8201 Rohrdorf-Thansau(DE)**
Erfinder: **Pawlowsky, Ernst**
**Marienbader Strasse 23**
**D-8202 Bad Aibling(DE)**

(74) Vertreter: **Hansen, Bernd, Dr. Dipl.-Chem. et al**
**Hoffmann, Eitle & Partner Patent- und**
**Rechtsanwälte Arabellastrasse 4**
**D-8000 München 81(DE)**

(54) **Verwendung einer aus einem polymeren Substrat und einer Oberflächenbeschichtung des Substrats mit einem Polyacrylsäure- oder -methacrylsäurederivat aufgebauten mikroporösen Membran zur Filtration von Bier.**

(57) Die Erfindung betrifft den Einsatz einer aus einem Polymeren Substrat und einer Oberflächenbeschichtung des Substrats mit einem Polyacrylsäure- oder -methacrylsäurederivat aufgebauten mikroporösen Membran zur Filtration von Bier. Dieser Membranfilter erweist sich insbesondere für die mikrobiologische Stabilisierung des Bieres und zur Abtrennung von Trübstoffen geeignet. Die verwendete Membran ermöglicht gleichzeitig, die bierschädlichen Keime und Trübstoffe zu entfernen und das Bier mit einem hohen Durchsatz über eine lange Zeit und damit kostengünstig und wirtschaftlich zu filtrieren.

EP 0 392 395 A1

## Verwendung einer aus einem polymeren Substrat und einer Oberflächenbeschichtung des Substrats mit einem Polyacrylsäure- oder -methacrylsäurederivat aufgebauten mikroporösen Membran zur Filtration von Bier

Die Erfindung betrifft die Verwendung von porösen Polymermembranen zur Filtration von Bier im Brauereibetrieb.

Die effektive Abtrennung unerwünschter Inhaltsstoffe bildet einen wesentlichen Schritt bei der Bierherstellung. Mechanische Verfahren, wie Zentrifugieren und Filtrieren, haben dabei gegenüber thermischen Verfahren (z.B. Kurzzeiterhitzung) und Konservierungsstoffen den Vorteil, dass die Produkte weder thermisch noch chemisch belastet werden.

Dominierende Rollen bei der Bierherstellung spielen die Produktqualität bzw. -reinheit sowie die Herstellungskosten. Von den im Brauprozess verwendeten Filtrationsanlagen wird deshalb gefordert, dass sie die anfallenden Trübstoffe und Hefen und die für das Bier schädlichen Mikroorganismen entfernen, gleichzeitig die Geruchs-, Geschmacks- und Fremdstoffneutralität des Bieres nicht beeinträchtigen und wirtschaftlich arbeiten. Ein höchstmöglicher Filtereffekt bei kleinen Filterflächen, hohen Filtriergeschwindigkeiten und langer Filterlaufzeit wird erwartet.

Die gegenwärtig noch gebräuchlichsten Filtrationsverfahren in den Brauereien bilden die Anschwemmfiltration mit Kieselgur als Filtrierhilfsmittel und die Schichtenfiltration mit faser- und kieselgurhaltigen Filtrierschichten. Die Abtrennung der Teilchen beruht dabei auf einer Siebwirkung und einer Adsorptionswirkung des Filtermaterials. Der grosse Verbrauch an Kieselgur und die fehlende Möglichkeit einer Regeneration dieses Filtrierhilfsmittels führt zu grossen Umweltbelastungen, so dass alternative Wege für eine problemlosere Bierklärung gesucht werden. Ein grosser Fortschritt konnte dabei mit der Entwicklung der Membranfiltration erreicht werden, bei der man dünne, hochporöse Membranen mit definierter Porengrösse, aufgebaut aus Kunststoff- oder Keramikmaterialien, als Sieb einsetzt. Bevorzugt werden polymere Werkstoffe aus Zellulosemischestern, Polyamiden, Polyimiden, Polyurethanen, Polysulfonen und Nylon 66, sowie Polyolefinen, insbesondere PTFE, PVDF, verwendet. Die Porengrössen und die Porengrössenverteilung können durch den Herstellungsprozess gezielt gesteuert werden, so dass die Membranen auf bestimmte Partikelgrössen eingestellt werden können, wobei die maximale Porengrösse die Grösse der abzutrennenden Partikel nicht überschreiten soll. Im Gegensatz zum Kieselgur- und Schichtenfilter kann durch geeignete Auswahl der Filtermembran eine bestimmte Partikelgrösse unabhängig von der Fliessgeschwindigkeit, von Schwankungen des Durchflusses und von Druckstössen mit definierter Sicherheit abgetrennt (zurückgehalten) werden. Weitere Vorteile der Membranfilter bestehen darin, dass sie das filtrierte Bier nicht nachteilig durch Abgabe von Partikeln oder Veränderung der Inhaltsstoffe beeinflussen. Die Membranfilter sind in ihrer Arbeitsweise leicht überprüfbar, lassen sich einfach handhaben, weisen ein problemloses Standverhalten und einen geringen Wartungsaufwand auf. Die Membranen werden entweder als hochporöse Filme oder in Kapillar- bzw. Rohrform hergestellt und können dabei auf eine Trägerschicht aufgebracht werden. Man unterscheidet Flachmembranen (Scheibenfilter, Kerzenfilter in gewickelter oder plissierter Form, Plattenfilter, dynamischer Druckfilter) und Rohr- bzw. Kapillarmembranen, wobei die Membranen in entsprechender Modulform angeordnet sein können.

Die Membranverfahren können nach der Grösse der abzutrennenden Teilchen klassifiziert werden. Hinsichtlich der Durchlässigkeit der jeweiligen Filtermembran unterscheidet man die Umkehrosmose, die Ultrafiltration, die Mikrofiltration und die konventionelle Filtration, wobei die Trenngrenzen oder einzelnen Filtrationsstufen sich überlappen:

| | Trenngrenzen | | |
|---|---|---|---|
| | MG der abtrennbaren Stoffe [g/mol] | Grösse der abtrennbaren Stoffe [$\mu$m] | abtrennbare Stoffe |
| Umkehrosmose Ultrafiltration | $\geq$ 300 - 1 000<br>1 000 - 1 000 000 | $2.10^{-3}$ - 0,5 | Moleküle, Ionen<br>Makromoleküle (Proteine Polysaccharide), Kolloide, Viren |
| Mikrofiltration | | $2{,}5\ 10^{-2}$ - 20 | Mikroorganismen, Bakterien, Kolloide, Feinpartikel |
| konventionelle Filtration | | $\geqq 5$ | Partikel, Teilchen |

Die Filtrationstechniken kann man in die konventionelle, statische Filtration und in die dynamische Filtration (Cross-Flow-Filtration, dynamische Druckfiltration) unterteilen. Im ersten Fall erfolgt die Filtration in der Weise, dass die zu filtrierende Lösung unter Druck auf den Filter gebracht wird und den Filter permeiert, wobei die zurückgehaltenen Teilchen auf der Filteroberfläche bleiben oder in den Poren stecken. Die gesamte zu filtrierende Flüssigkeit wird durch den Filter gedrückt. Da sich bei dieser Verfahrensweise rasch auf der Oberfläche ein Filterkuchen bildet, der den Strömungswiderstand stark erhöht und den Durchsatz mindert, können nur kleine Mengen oder bereits weitgehend vorgeklärte Mengen filtriert werden. Die dynamische Filtration vermeidet diesen verfahrenstechnischen Nachteil, indem die zu filtrierende Flüssigkeit nicht einfach unter Druck auf die Filteroberfläche gebracht wird, sondern der grössere Teil tangential, d.h. parallel zur Filteroberfläche und senkrecht zum Filtratfluss, mit grosser Geschwindigkeit über die Filteroberfläche geführt wird (Cross-Flow-Filtration), oder indem die Filterfläche mit grosser Geschwindigkeit bewegt wird (dynamische Druckfiltration), und damit jeweils nur ein Anteil der Flüssigkeit den Filter durchdringt. Die zurückgehaltenen Stoffe lagern sich damit nicht auf der Oberfläche des Filters ab, bilden keinen undurchlässigen Filterkuchen und verlegen nicht die Poren des Filters, sondern werden durch die hohe Strömungsgeschwindigkeit entlang der Filteroberfläche fortgeführt und im Unfiltrat aufkonzentriert. Damit erreicht man eine höhere Filtratmenge bis zum Verstopfen des Filters.

In den Filtrationsprozessen des Brauereibetriebes ist es vorteilhaft, bierschädliche Keime herauszufiltrieren. Diese Filtration erfolgt üblicherweise mit einer Membran nach dem statischen Filtrationsprinzip. Die in der Praxis eingesetzten Membranfilter mit einer Porengrösse von 0,8 $\mu$m besitzen zwar einen hohen Durchsatz und eine hohe Durchlässigkeit bei akzeptablen Drücken und arbeiten damit wirtschaftlich, eine mikrobiologische Sterilität hinsichtlich der für das Bier schädlichen Bakterien kann jedoch nicht gewährleistet werden. Verwendet man Membranen mit einem kleineren Porendurchmesser (0,45 $\mu$m, 0,20 $\mu$m), so werden die bierschädlichen Bakterien durch die Membran entfernt, eine wirtschaftliche Arbeitsweise und damit eine kostengünstige Bierherstellung ist jedoch aufgrund des geringen Druchflusses und der erhöhten Verstopfungsneigung meist nicht mehr gegeben.

Bei einem anderen wichtigen Filtrationsprozess wird das Bier bei seinem Weg aus den Lagertanks von Hefe, Trübstoffen und Bakterien befreit. Als Filtermittel zur Abtrennung des aus Proteinagglomeraten bestehenden Kühltrubs dient bei einer statischen Filtration immer noch Kieselgur, das aber die eingangs aufgezählten Nachteile eines grossen Verbrauchs, einer fehlenden Regenerationsmöglichkeit und einer grossen Umweltbelastung besitzt. Filtermaterialien wie Keramik, $Al_2O_3$ oder Polypropylen, wurden als Membranen in einer dynamischen Filtration zur Abtrennung von Hefe und Trübstoffen getestet, konnten aber bisher aufgrund des geringen Durchsatzes keinen technischen Durchbruch erzielen.

In der europäischen Patentanmeldung EP-A2 0 186 758 werden Filtermembranen aus einem polymeren Substrat, dessen Oberfläche mit einem vernetzten Polyhydroxyalkylacrylat oder -methacrylat oder Polyacrylamid oder -methacrylamid beschichtet ist, offenbart. Diese Membranen werden bevorzugt in der elektronischen und pharmazeutischen Industrie eingesetzt. Auch der Einsatz bei der Filtration von Körperflüssigkeiten wird angesprochen. Auf eine Verwendung dieser Filter für die mikrobiologische Stabilisation von Getränken wird nicht eingegangen, insbesondere fehlen Hinweise auf die spezielle Problematik bei der Bierfiltration.

Der Erfindung liegt die Aufgabe zugrunde, einen Membranfilter für die Filtration des Bieres aufzufinden, der einerseits die bierschädlichen Bakterien zurückhält, zum anderen eine hohe Durchlässigkeit (maximales Filtratvolumen bis zum irreversiblen Verstopfen des Filters) für das zu filtrierende Bier und einen hohen

3

Durchfluss aufweist. Die Durchlässigkeit beeinflusst die Grösse der Filtereinrichtung und die Häufigkeit des Filterwechsels und stellt damit eine entscheidende wirtschaftliche Grösse dar. Um eine hohe Reinheit des Bieres zu gewährleisten, darf die eingesetzte Membran möglichst keine bei der Bierfiltration herauslösbaren Komponenten beinhalten, ferner dürfen sich beim Filtrationsprozess keine Filterpartikel von der Membran lösen. Aus wirtschaftlichen Gründen und um eine Verstopfung des Filters durch Belegung der inneren Filteroberfläche zu verhindern, soll die Membran keine grossen Mengen des zu filtrierenden Materials binden. Für eine Sterilisierung und eine Regeneration des Membranfilters sind des weiteren eine hohe hydrolytische und chemische Stabilität in einem weiten pH-Bereich und unter Oxidationsbedingungen gefordert, des weiteren muss die Membran thermisch beständig sein und gute mechanische Eigenschaften aufweisen. Neben der Filtration des Bieres zur Abtrennung bierschädlicher Keime soll auch für die Abtrennung der Hefe und der Trübstoffe vom Bier ein geeigneter Membranfilter ermittelt werden, der die Nachteile des Kieselgur- und des Schichtenfilters überwindet und die gleichen Kriterien wie die Membran zur mikrobiologischen Stabilisierung des Bieres erfüllt.

Die Aufgabe wird erfindungsgemäss durch eine mikroporöse Membran gelöst, die aus einem polymeren Substrat und einer Oberflächenbeschichtung des Substrates mit einem Polyacrylsäure- oder -methacrylsäurederivat aufgebaut ist. Eine Membran dieser Bauart eignet sich zur Filtration von Bier, da sie die oben aufgeführten Bedingungen erfüllt. Sie ist speziell zum Herausfiltern bierschädlicher Keime mittels eines statischen Filtrationsprozesses unter Erhalt eines mikrobiologisch stabilen Bieres und zur Abtrennung von Trübstoffen (Proteinagglomeraten) und Hefe über eine dynamische Filtration geeignet.

In einer bevorzugten Ausführungsform ist das polymere Substrat ein halogeniertes Kohlenwasserstoff-Polymer. Besonders bevorzugt sind dabei Substrate aus fluorierten Kohlenwasserstoff-Polymeren, wobei Polyvinylidenfluorid und Polytetrafluorethylen sich als besonders günstig erweisen. In einer weiteren günstigen Ausführungsform kann das Substrat auch ein Kohlenwasserstoff-Polymer sein. Hierbei ist an Polyolefine wie Polyethylen, Polypropylen, Polystyrole, Polyester, einschliesslich Polyethylenterephtalat, Polybutylenterephtalat, und an Vinylpolymere wie Polyvinylchlorid und Polyacrylnitril gedacht. Auch Copolymere aus verschiedenen Polymeren, z.B. Butadien-Styrol-Copolymere können geeignet sein. Als vorteilhaft erweist sich weiterhin ein Substrat aus Polysulfonen.

Die Polyacrylsäure- oder -methacrylsäurederivate, die die Oberflächenbeschichtung des Substrates bilden, sind in einer vorteilhaften Ausführungsform der Erfindung vernetzt. Bevorzugte Polyacrylsäure- oder -methacrylsäurederivate sind unsubstituierte oder substituierte Polyacrylate oder -methacrylate, wobei Polyhydroxyalkylacrylate oder -methacrylate besonders geeignet sind. Des weiteren kann es günstig sein, wenn das Polyacrylat oder -methacrylat vernetzt ist. Als vorteilhaft für die Vernetzung erweisen sich Propylenglycoldiacrylat und Tetraethylenglycoldiacrylat. Auch bi- oder multifunktionale Acrylate oder Methacrylate werden bevorzugt für die Vernetzung eingesetzt. Eine besonders günstige Ausführungsform der vorliegenden Erfindung erhält man, wenn man das Polymersubstrat mit Polyhydroxyalkylacrylat oder -methacrylat, das mit Propylenglycoldiacrylat oder Tetraethylenglycoldiacrylat vernetzt ist, beschichtet. Geeignete Polyhydroxyalkylacrylate oder -methacrylate beinhalten Poly-1-hydroxyprop-2-ylacrylat, Poly-2-hydroxyprop-1-ylacrylat, Polyhydroxypropylmethacrylat, 2,3-Dihydroxypropylacrylat, Hydroxyethylacrylat, Hydroxyethylmethacrylat oder Mischungen daraus.

Ein weiteres vorteilhaftes Polyacrylsäure- oder -methacrylsäurederivat ist durch Polyacrylamid oder -methacrylamid gegeben, das vorteilhafterweise vernetzt ist. Als bevorzugte Vernetzer fungieren bi- oder multifunktionale Acrylamide oder Methacrylamide.

Die Porengrösse des Membranfilters liegt vorzugsweise im Bereich von 0,1 bis 1,2 $\mu$m, insbesondere bei 0,2 bis 0,8 $\mu$m. In einer speziellen Ausführungsform beträgt die Porengrösse 0,45 bis 0,65 $\mu$m.

Die Bestimmung der Porengrösse erfolgt hierbei durch Messung des Blasendruckes mit Wasser, der mit der Porengrösse über eine korrigierte Gleichung von Schroeder und Deluka, 1980 (Brock, Thomas D.; Membranfiltration; Kapitel 4, Seite 48 (1983)), verbunden ist:

$$D = \frac{4\gamma \cdot \cos\Theta \cdot f}{p}$$

D = Porengrösse ($\mu$m)

$\gamma$ = Oberflächenspannung der benetzenden Flüssigkeit (dyn/cm) (Wasser: 72 dyn/cm)

($\Theta$) = Kontaktwinkel zwischen Membran und Flüssigkeit (bei Wasser: $\Theta = 0$, da vollständige Benetzung vorliegt)

f = filterspezifischer Faktor, abhängig von Aufbau und Struktur der Membran

p = Blasendruck (bubble point) (bar) (Messung gemäss ASTM F316 (1986))

Die Konstante $4 \cdot \gamma \cdot \cos\Theta \cdot f$ besitzt bei den erfindungsgemäss eingesetzten Membranfiltern in Abhängigkeit von dem speziellen Aufbau und der Struktur der Membranen einen Wert von 0,6 bis 0,9. Dieser Bereich gilt für einen Temperaturwert, der bei Raumtemperatur liegt.

Das Hohlvolumen (Porosität) der Membran beträgt vorteilhaft Werte von 65 % oder mehr.

Die für den Brauereibetrieb günstigen Membranfilter weisen bei einem Differenzdruck von 0,7 bar und bei 20 °C eine Wasserdurchflussrate von 2,5 bis 200 ml/min cm² auf. Besonders vorteilhaft sind Filter mit einem Durchfluss von 25 bis 70 ml/min cm², der hoch genug ist, um neben einer hinsichtlich der bierschädlichen Keime sterilen auch eine wirtschaftlich vorteilhafte Filtration zu gewährleisten. Der Bubble-Point mit Wasser liegt bei den erfindungsgemäss verwendeten Membranen im Bereich von 0,5 bis 5,0 bar. Vorzugsweise werden Membranen mit einem Bubble-Point von 0,90 bis 2,0 bar eingesetzt.

In einer besonders vorteilhaften Ausführungsform, bei der ein zuverlässig mikrobiologisch stabilisiertes Bier bei ausreichend hohem Druchsatz und damit kostengünstig erhalten wird, weist der Membranfilter einen Porendurchmesser von 0,45 bis 0,65 µm, eine Porosität grösser gleich 65 %, einen Wasserdurchfluss von 25 bis 70 ml/min cm² (Druck: 0,7 bar, Temperatur: 20 °C) und einen Bubble-Point mit Wasser von 0,90 bis 2,0 bar auf.

Die erfindungsgemäss eingesetzten Membranen besitzen eine Dicke von 50 bis 300 µm, wobei ein Bereich von 80 bis 180 um bevorzugt ist. Das Flächengewicht liegt vorzugsweise bei 3 bis 12 mg/cm². Der Bereich zwischen 6,5 und 9,5 mg/cm² ist dabei als besonders günstig anzusehen.

Die Membranen sind vorzugsweise gegen alkalische Hypochloritlösungen stabil, wobei der pH-Wert der Lösung bevorzugt bei 8-9,5 liegt. Die obige Lösung ist ein wirksames Mittel zur Reinigung der Membranen, die somit leicht regeneriert werden können. Des weiteren können die Membranfilter im kochenden Wasser behandelt werden, wobei der Anteil an extrahierbarem Material weniger als 0,5 Gew.% beträgt.

Für die Anwendung als Filter werden die Membranen vorteilhaft zur mechanischen Stabilisierung mit Stützmaterialien versehen und als Flachfilter (Scheibenfilter, Kerzenfilter mit gewickelter oder plissierter Membran, Plattenfilter, dynamischer Druckfilter) oder als Rohr- bzw. Kapillarfilter ausgebildet. Die Filter sind dabei häufig in entsprechenden Modulen angeordnet.

Die erfindungsgemäss für die Bierfiltration verwendete Membran kann hergestellt werden, indem man zunächst das polymere Substrat wäscht, um die Oberfläche der Poren zu benetzen. Anschliessend wird das Substrat mit einer Lösung, die ein Polyacrylsäure- oder -methacrylsäurederivat, einen Polymerisationsinitiator für das Acrylsäure- oder -methacrylsäurederivat und gegebenenfalls einen Vernetzer enthält, unter Bedingungen kontaktiert, bei denen das Acrylsäure- oder -methacrylsäurederivat polymerisiert und gegebenenfalls vernetzt wird, und das erhaltene, gegebenenfalls vernetzte Polyacrylsäure- oder -methacrylsäurederivat die Oberfläche des Substrates überzieht, ohne die Poren zu verstopfen.

Als bevorzugte Initiatoren werden Persulfate verwendet, wobei Ammoniumpersulfat besonders geeignet ist. Weitere günstige Initiatoren bilden Azo-Verbindungen oder auch Peroxy-Verbindungen.

Bei der obigen Herstellung liegt das Acrylsäure- oder -methacrylsäurederivat bevorzugt in einer Menge von 1 bis 20 Gew.%, insbesondere 3 bis 9 Gew.%, in bezug auf die gesamte Reaktionslösung vor. Der Vernetzer wird vorteilhafterweise in einer Menge von 0,4 bis 100 Gew.%, insbesondere 1 bis 20 Gew.%, in bezug auf das Acrylsäure-oder -methacrylsäurederivat eingesetzt. Der Initiator schliesslich wird vorzugsweise in einer Menge von 1 bis 25 Gew.%, insbesondere 5 bis 20 Gew.%, ebenfalls in bezug auf das Acrylsäure- oder -methacrylsäurederivat verwendet.

Eine besonders vorteilhafte Membran wird erhalten, wenn man Hydroxyalkylacrylat oder -methacrylat in Gegenwart von Ammoniumpersulfat und Tetraethylenglycoldiacrylat polymerisiert.

Die im Brauereibetrieb erfindungsgemäss eingesetzten Membranfilter erfüllen die eingangs aufgestellten Forderungen. Im Vergleich zu den üblicherweise verwendeten Membranen ermöglichen sie bei gegebener Porengrösse und damit bei gegebenem Rückhaltevermögen insbesondere eine grosse Druchflussrate bzw. einen grossen Durchsatz. Damit kann eine sterilisierende Filtration hinsichtlich der bierschädlichen Keime bei ausreichend hohem Druchfluss und in einer wirtschaftlich günstigen Arbeitsweise erreicht werden. Zum anderen ermöglichen der erzielbare hohe Durchsatz und die leichte Regenerierbarkeit der Membran ohne Verlust der Membraneigenschaften, insbesondere unter Verwendung von alkalischer Hypochloritlösung (pH-Wert 8-9), dass der Kieselgur-Schichtenfilter bei der Abtrennung der Trübstoffe und der Hefe vorteilhaft ersetzt werden kann.

Die Vorteile der erfindungsgemäss verwendeten Membranen sind in der folgenden Tabelle 1 verdeutlicht, bei der die maximale Durchlässigkeit $V_{max}$ (hl Bier/m²) einer ausgewählten, vorfiltrierten Biersorte ohne Reinigung bzw. Regeneration der Membran für verschiedene Membranmaterialien, die alle zur Sterilfiltration von Getränken geeignet sein sollen, gegenübergestellt ist.

5

## TABELLE 1

$V_{max}$ [hl Bier/m$^2$]; Druck = 1 bar

| | | |
|---|---|---|
| **Porengrösse 0,2/um** | Seitz (Polysulfon) | 0,86 |
| | Millipore (Zellulosemischester) | 3,2 |
| | Enka PP high flux (Polypropylen) | 0,69 |
| | Gelman Supor 200 (Polyethersulfon) | 4,8 |
| erfindungsgem. eingesetzte Membran: | Millipore (beschichtetes Poly-vinylidenfluorid) | 6,9 |
| | Wasserdurchflussrate: 6,9 ml/min.cm$^2$ (0,7 bar) | |
| | Bubble-Point (H$_2$O): 2,46 bar | |
| | Membrandicke: 100/um | |
| | extrahierbarer Anteil: ≤0,5 % | |
| **Porengrösse 0,45/um** | Brunswick (asym. Polysulfon) | 0,30 |
| | Cuno (Nylon 66) | 4,1 |
| | Millipore (Polytetrafluorethylen) | 0,97 |
| | Millipore (Polyvinylidendifluorid) | 3,2 |
| | MSI (Nylon 66) | 4,3 |
| | Nuclepore (Polycarbonat) | 1,6 |
| | Nuclepore (Polyester) | 0,81 |
| | Pall (Nylon 66) | 2,6 |
| | Seitz (Polysulfon) | 2,0 |
| | Gelman Supor 450 (Polyethersulfon) | 13,7 |
| erfindungsgem. eingesetzte Membran: | Millipore (beschichtetes Poly-vinylidenfluorid) | 31,3 |
| | Wasserdurchflussrate: 29 ml(min.cm$^2$ (0,7 bar) | |
| | Bubble-Point (H$_2$O): 1,55 bar | |
| | Membrandicke: 120/um | |
| | extrahierbarer Anteil: ≤0,5 % | |

EP 0 392 395 A1

EP 0 392 395 A1

Porengrösse 0,65 /um

erfindungsgem. eingesetzte
Membran:                         Millipore (beschichtetes Poly-
                                 vinylidenfluorid)                              50,8
                                 Wasserdurchflussrate:    69 ml/min.cm$^2$ (0,7 bar)
                                 Bubble-Point (H$_2$O):   0,98 bar
                                 Membrandicke:            140 /um
                                 extrahierbarer Anteil:   $\leq$0,5 %

Porengrösse 0,8 /um              Pall (Nylon 66)                                5,6
                                 Schleicher und Schull (Zellulosemischester)   8,4
                                 Gelman Supor 800 (Polyethersulfon)            21

Versuch 1:

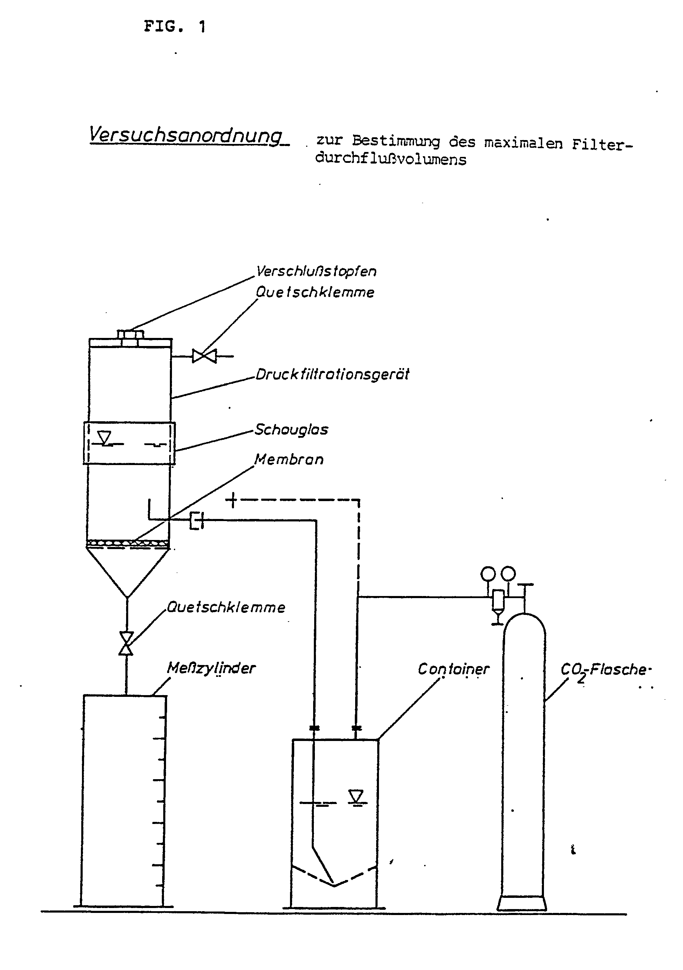

Die Versuchsanordnung, mit der das maximale Biervolumen gemäss Tabelle 1, das unter definierten Bedingungen und bei einer ausgewählten Biersorte durch einen Membranscheibenfilter mit 47 mm Durchmesser passieren kann, ermittelt wurde, ist in Fig. 1 dargestellt.

Bei der Versuchsdurchführung wird die Membran zunächst in den Filterhalter eingelegt, wobei hydrophobe Membranen, wie PP, PTFE, vollständig mit Ethanol benetzt werden. In das Druckfiltrationsgerät gibt man anschliessend ca. 230 bis 250 ml Wasser, das vorher durch eine 0,22 $\mu$m-Membran partikelfrei filtriert wurde, und verschliesst das Filtrationsgerät mit dem oberen Verschlussstopfen. Die $CO_2$-Druckflasche, die über einen regelbaren Druckminderer auf 1 bar eingestellt ist, wird nun über einen Stecker mit dem Filterhalter verbunden. Dadurch öffnen sich die selbstschliessenden Schnellkupplungen und das Druckfiltrationsgerät wird unter 1 bar $CO_2$-Druck gesetzt. Zum Zeitpunkt $t_0$ öffnet man die Quetschklemme am Filtratauslauf. Das filtrierte Wasser wird mit einem Messzylinder aufgefangen, und die Zeiten $t_1$ bei 100 ml und $t_2$ bei 200 ml Durchfluss gemessen. Daraus errechnet sich der Wasserwert der Membran als Volumen/Zeit in ml/min.. Der Wasserwert der Membran dient der Kontrolle der Gleichartigkeit eines Membrantyps. Das Wasser wird anschliessend vollständig durch den Filter gedrückt, die Schnelltrennkupplungen gelöst und die Quetschklemme am Filtratauslauf geschlossen.

Der Stecker der Bierleitung des Behälters, der maximal 18 l Bier fasst, wird mit der Schnelltrennkupplung am Druckfiltrationsgerät verbunden. Anschliessend öffnet man die Quetschklemme an der oberen Schlaucholive vorsichtig solange, bis der Flüssigkeitsspiegel im Bereich des Schauglases sichtbar wird. Im Schauglas kann überprüft werden, ob die Membran immer vollständig mit Flüssigkeit bedeckt ist und somit kein partielles Verblocken der Membranoberfläche durch Gasblasen aus dem $CO_2$-Gehalt des Bieres erfolgt. Der Stand der Flüssigkeit im Schauglas ändert sich wegen der konstanten Druckverhältnisse während der Filtration nicht wesentlich. Durch den Vordruck im Behälter aus der Druckflasche herrscht auch im Druckfiltrationsgerät ein Druck von 1 bar.

Die Quetschklemme am Filtratauslauf wird zum Zeitpunkt $t_0 = 0$ geöffnet und das filtrierte Bier mit einem Messgefäss aufgefangen. Es werden fortlaufend die Volumenwerte $V_1$, $V_2$, ..., $V_n$ sowie die zugehörigen Zeiten $t_1$, $t_2$, ..., $t_n$ protokolliert. Das Bier wird solange filtriert, bis der Fluss in ml/min. ca. 1/5 des Anfangsflusses (nach den ersten 30 bis 50 ml Bier) beträgt.

Bei der Auswertung berechnet man die Regressionsgerade durch die Punkte

$$\left( \ \frac{V_i + V_{i+1}}{2} \ , \ \frac{V_{i+1} - V_i}{t_{i+1} - t_i} \ \right)$$

für 0 kleiner gleich i kleiner n und $V_0 = 0$. Für $V_0 = 0$ ergibt sich der maximale Anfangsfluss, für $V/t = 0$ erhält man das bei 1 bar und der gegebenen Filterfläche maximal filtrierbare Volumen. Dieses lässt sich umrechnen auf die Einheit hl Bier/m² Filterfläche und ist in der Tabelle 1 als $V_{max}$ bezeichnet.

Der Test wurde bei 4±1 °C durchgeführt. Er ist von der verwendeten Biersorte abhängig, so dass die erhaltenen Maximalvolumina keine absoluten Werte darstellen, sondern nur zu Vergleichszwecken dienen.

Aus Tabelle 1 ist ersichtlich, dass die verschiedenen Membranfilter für den speziellen Fall der Bierfiltration deutliche Unterschiede hinsichtlich der maximalen Durchflussmenge ohne Regeneration aufweisen, was in erster Linie auf die unterschiedliche Adsorption gelöster und kolloidal gelöster Bierinhaltsstoffe zurückzuführen ist, da das Bier bzgl. mechanisch verstopfender Partikel vorfiltriert war. Bei gegebener Porengrösse erreicht der maximale Durchfluss der erfindungsgemäss verwendeten Membranen jeweils die höchsten Werte.


Vesuch 2:

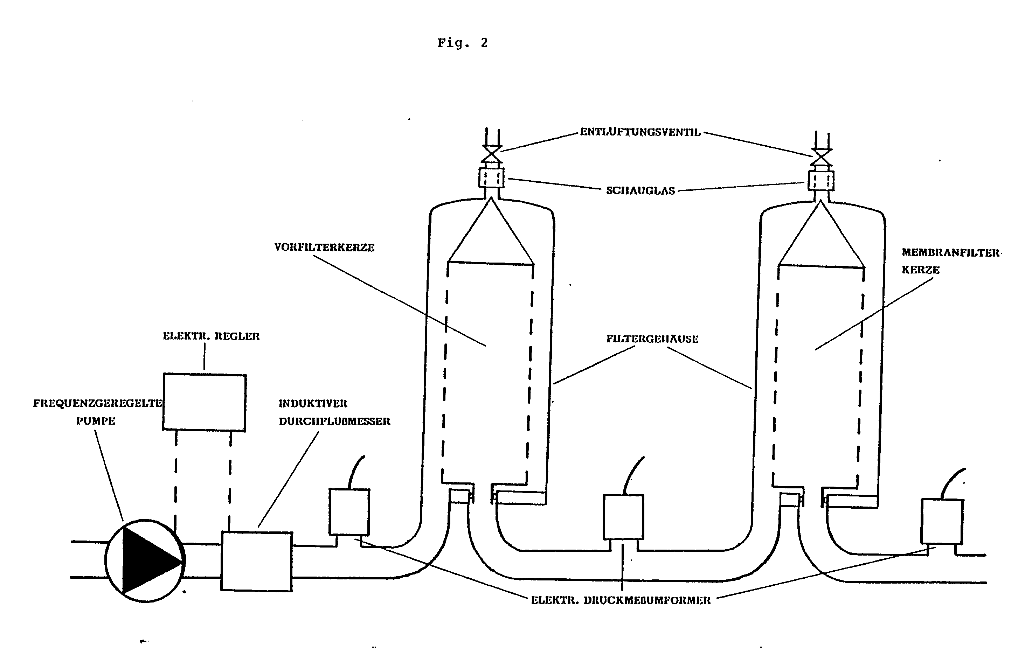

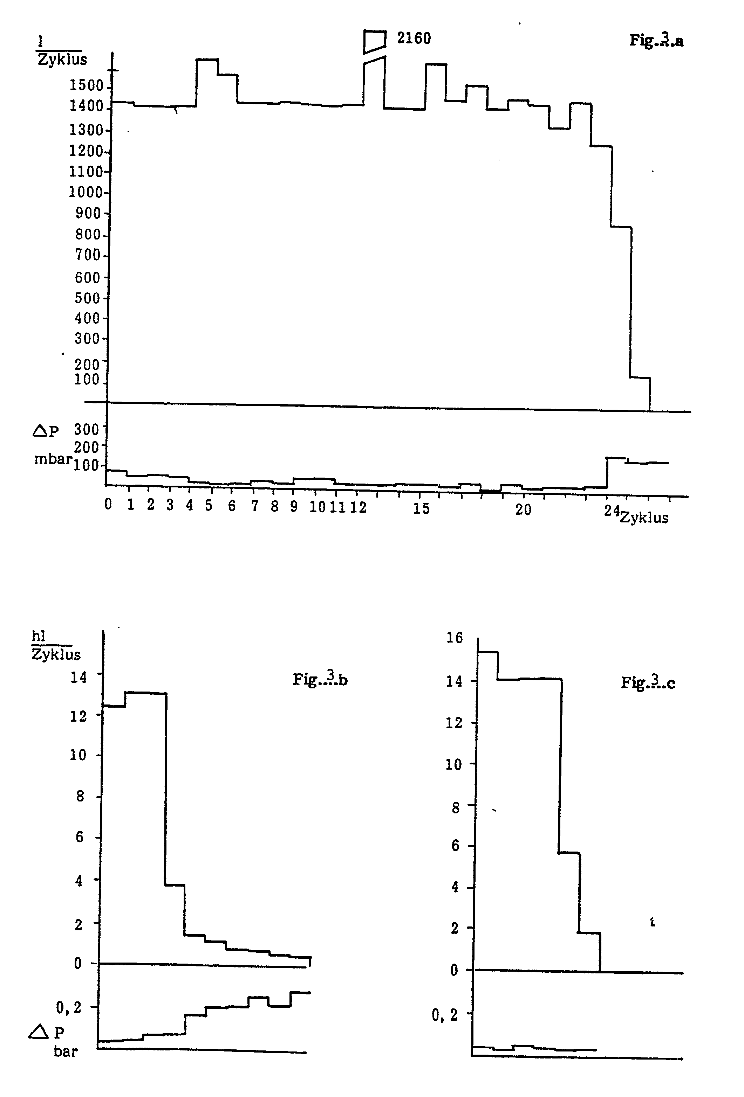

Die Versuchsanordnung, mit der das maximale Biervolumen, das unter definierten Bedingungen und bei einer ausgewählten Biersorte durch eine Membranfilterkerze der Länge 10″ bei wiederholter Regeneration des Filters ermittelt wurde, ist in Figur 2 dargestellt.

8

Die Flussrichtung des Bieres, der Reinigungs- und Sterilisationsmedien ist immer von der Pumpe durch den induktiven Druchflussmesser über die Vorfilterkerze zur Membranfilterkerze hin.

Die Durchflussmenge/Zeit wird mit dem induktiven Durchflussmesser erfaßt und mittels des elektronischen Reglers und der frequenzgeregelten Pumpe auf dem vorgegebenen Sollwert gehalten. Der Sollwert beträgt 100 l/h bei der Bierfiltration und 200 l/h während der Reinigung bzw. Sterilisation. Durch die drei elektronischen Druckmessumformer wird der Systemdruck sowie durch Differenzbildung die beiden Differenzdrücke über die Vorfilterkerze und die Membranfilterkerze erfasst.

Mit Hilfe der beiden Schaugläser und Entlüftungsventile wird kontrolliert, dass der Flüssigkeitsspiegel in den Filtergehäusen während der Bierfiltration sowie der Reinigung und Sterilisation immer in den Schaugläsern zu sehen ist. Eine Gasverblockung der Filterkerzen ist so ausgeschlossen.

Die Vorfilterkerze beinhaltet ein plissiertes Polypropylen-Vlies mit einer nominellen Rückhalterate von 0,2 $\mu$m.

Die Bierfiltration wird jeweils nach einer vorgegebenen Zeit, bei der das Signal einer elektrischen Zeitschaltuhr erfolgt, oder bei Erreichen eines maximalen Differenzdruckes von ca. 0,7 bar, der über Vor- und Membranfilterkerze gemessen wird, beendet. Anschliessend werden die Vorfilter- und die Membranfilterkerze gereinigt und sterilisiert und erneut zur Bierfiltration eingesetzt. Der Zyklus Bierfiltration-Reinigung-Sterilisation wird so oft wiederholt, bis die während eines Zyklus filtrierbare Biermenge deutlich kleiner wird, weil der maximale Differenzdruck an der Membranfilterkerze schon nach kurzer Zeit erreicht wird und die Bierfiltration dadurch vorzeitig beendet wird.

Bei der Reinigung werden zwei Verfahren a) und b) verwendet. Im Verfahren a) wird die Filteranlage mit kaltem Wasser mit 200 l/h für ca. 15 min. und anschliessend mit heissem Wasser von ca. 60°C mit 200 l/h für ca. 20 min. gespült. Im Verfahren b) erfolgt die Kaltwasserspülung der Filteranlage mit 200 l/h für ca. 15 min., anschliessend wird mit Reinigungslösung (schwache Natronlauge mit pH 8,0 bis 9,5 unter Zusatz von Chlorbleichlauge, so daß 200 ppm aktives Chlor in der Reinigungslösung enthalten sind) bei ca. 50°C mit 200 l/h für ca. 20 min. gespühlt. Anschliessend erfolgt eine Kaltwasserspülung mit 200 l/h zur Entfernung der Reinigungslösungsreste für eine Zeitdauer von ca. 10 bis 15 min.

Der Differenzdruck (Delta p) über die Membranfilterkerze wird mit Wasser unter 20°C bei konstantem Fluß von 200 l/h nach der vorhergehenden Sterilisation und vor der Bierfiltration des zugehörigen Zyklus gemessen. Ein Anstieg des Differenzdruckes (Delta p) ist ein Hinweis für den Grad der Verstopfung einer Filterkerze.

Ein Integritätstest (Druckhaltetest und Bubble-Point-Test) nach dem Einsetzen der neuen Membranfilterkerze und vor dem Ausbau der erschöpften Membranfilterkerze belegt, dass die Membranfilterkerzen während der ganzen Versuchsdauer ihre Integrität behalten haben und nicht z.B. durch den oxidierenden Einfluss der Reinigungslösung beschädigt werden.

Figur 3a: Maximales Biervolumen (l/Zyklus), das bei Verwendung der erfindungsgemässen Membran mit einem Porendurchmesser von 0,45 $\mu$m in Abhängigkeit von der Zyklenzahl erzielt wird, und Differenzdruck (Delta p) der Membranfilterkerze.

Figur 3b: Maximales Biervolumen (hl/Zyklus), das bei Verwendung einer Nylon-Membran (Pall LV) mit einem Porendurchmesser von 0,45 $\mu$m in Abhängigkeit von der Zyklenzahl erreicht wird, und Differenzdruck (Delta p) der Membranfilterkerze.

Figur 3c: Maximales Biervolumen (hl/Zyklus), das unter Verwendung einer Polyethersulfon-Membran (Gelman Supor 450) bei einem Porendurchmesser von 0,45 $\mu$m in Abhängigkeit von der Zyklenzahl erreicht wird, und Differenzdruck (Delta p) der Membranfilterkerze.

Der Versuch gemäss Figur 3a verdeutlicht die Überlegenheit der erfindungsgemäss verwendeten Membran im Vergleich zu herkömmlichen Polymer-Membranen. Ein hohes Biervolumen von 1400 bis 1500 l/Zyklus wird über eine hohe Zyklenzahl von ca. 24 erreicht. Der Differenzdruck der Membranfilterkerze bewegt sich während dieser Zyklenzahl auf einem Wert unterhalb von 70 mbar. Die Ergebnisse zeigen, dass die Eigenschaft der geringen Adsorption bei der erfindungsgemäss verwendeten Membran über die ganze Lebensdauer der Membranfilterkerze (ca. 24 Zyklen) erhalten bleibt. Erst nach dieser hohen Zyklenzahl macht sich die allmählich ansteigende irreversible Verstopfung, die auch durch das verwendete Reinigungsverfahren b) nicht beseitigt werden kann, so bemerkbar, dass die Durchflußmenge des Biervolumens sinkt, und der Differenzdruck der Membranfilterkerze ansteigt. Die Gesamtmenge an Bier, die während der Lebensdauer der Membran geflossen ist, beträgt 367 hl/10$''$.

Figure 3b zeigt den typischen Verlauf für eine Membranfilterkerze, die aus Kompatibilitätsgründen nur mit Heisswasser (Verfahren a)) gereinigt werden kann. Die Adsorption kolloidaler Bierinhaltsstoffe kann durch dieses Verfahren nur unvollständig rückgängig gemacht werden, so dass die Membranfilterkerze schon nach einer sehr kleinen Anzahl von Zyklen (ca. 3 Zyklen) verstopft, was am steigenden Differenzdruck der Membranfilterkerze zu erkennen ist. Nach drei Zyklen ist die Membranfilterkerze so verstopft, dass während der vierten Bierfiltration die Abschaltung in Folge des maximalen Differenzdruckes der Membranfilterkerze wirksam wird. Während der folgenden Zyklen sinkt das Biervolumen/Zyklus weiter mit steigender Verstopfung bzw. steigendem Differenzdruck. Das Gesamtdurchflussvolumen an Bier beträgt 47,2 hl/10$''$.

Das Ergebnis des Versuchs gemäss der Figure 3c zeigt, dass das Biervolumen bei der verwendeten Polyethersulfon-Membran ebenfalls nach einer geringen Anzahl von Zyklen stark absinkt, während jedoch der Differenzdruck der Membranfilterkerze nahezu konstant bleibt. In diesem Fall ist davon auszugehen, dass die Polyethersulfon-Membran durch das Reinigungsverfahren b) ihre geringe Adsorptionsfähigkeit verliert, ohne dass jedoch die Integrität der Membranfilterkerze verändert wird. Die Gesamtdurchflussmenge an Bier beträgt 65,4 hl/10$''$.

Aus den vorhergehenden Versuchen ist ersichtlich, dass die verschiedenen Membranfilter für den speziellen Fall der Bierfiltration deutliche Unterschiede aufweisen. Die Membranen der vorliegenden Erfindung zeichnen sich durch ein hohes Bierflussvolumen bei einer hohen Lebensdauer der Membran (hohe Zahl an Reinigungszyklen möglich) aus. Mit diesen Membranen verbindet sich ein grosser Fortschritt bei der Bierfiltration, da nun neben einer garantierten Abtrennung bierschädlicher Bakterien das Bier auch mit einem hohen Durchsatz bei hoher Lebensdauer und damit kostengünstig filtriert werden kann.

## Ansprüche

1. Verwendung einer aus einem polymeren Substrat und einer Oberflächenbeschichtung des Substrates mit einem Polyacrylsäure- oder -methacrylsäurederivat aufgebauten Membran zur Filtration von Bier.

2. Verwendung einer Membran nach Anspruch 1 zum Herausfiltern bierschädlicher Keime mittels einer statischen Filtration.

3. Verwendung einer Membran nach Anspruch 1 zum Abtrennen der Trübstoffe und Hefen über eine dynamische Filtration (Cross-Flow-Filtration oder dynamische Druckfiltration).

4. Verwendung einer Membran nach einem oder mehreren der vorhergehenden Ansprüche, dadurch **gekennzeichnet**, dass das Substrat ein halogeniertes Kohlenwasserstoff-Polymer ist.

5. Verwendung einer Membran nach Anspruch 4, dadurch **gekennzeichnet**, dass das Substrat ein fluoriertes Kohlenwasserstoff-Polymer ist.

6. Verwendung einer Membran nach Anspruch 5, dadurch **gekennzeichnet**, dass das Substrat Polyvinylidenfluorid ist.

7. Verwendung einer Membran nach Anspruch 5, dadurch **gekennzeichnet**, dass das Substrat Polytetrafluorethylen ist.

8. Verwendung einer Membran nach einem oder mehreren der Ansprüche 1 bis 3, dadurch **gekennzeichnet**, dass das Substrat ein Kohlenwasserstoff-Polymer ist.

9. Verwendung einer Membran nach einem oder mehreren der Ansprüche 1 bis 3, dadurch **gekennzeichnet**, dass das Substrat ein Polysulfon darstellt.

10. Verwendung einer Membran nach einem oder mehreren der vorhergehenden Ansprüche dadurch **gekennzeichnet**, dass das Polyacrylsäure-oder -methacrylsäurederivat vernetzt ist.

11. Verwendung einer Membran nach einem oder mehreren der vorhergehenden Ansprüche, dadurch **gekennzeichnet**, dass das Polyacrylsäure-oder -methacrylsäurederivat ein unsubstituiertes oder substituiertes Polyacrylat oder -methacrylat ist.

12. Verwendung einer Membran nach Anspruch 11, dadurch **gekennzeichnet**, dass das Polyacrylat oder -methacrylat ein Polyhydroxyalkylacrylat oder -methacrylat ist.

13. Verwendung einer Membran nach Anspruch 11 oder 12, dadurch **gekennzeichnet**, dass das Polyacrylat oder -methacrylat vernetzt ist.

14. Verwendung einer Membran nach Anspruch 13, dadurch **gekennzeichnet**, dass das Polyacrylat oder -methacrylat mit Propylenglycoldiacrylat vernetzt ist.

15. Verwendung einer Membran nach Anspruch 13, dadurch **gekennzeichnet**, dass das Polyacrylat oder -methacrylat mit Tetraethylenglycoldiacrylat vernetzt ist.

16. Verwendung einer Membran nach Anspruch 13, dadurch **gekennzeichnet**, dass das Polyacrylat oder -methacrylat mit bi- oder multifunktionalem Acrylat oder Methacrylat vernetzt ist.

17. Verwendung einer Membran nach Anspruch 12, 14 und 15, dadurch **gekennzeichnet**, dass das Polyacrylat oder -methacrylat ein Polyhydroxyalkylacrylat oder -methacrylat ist und mit Propylenglycoldiacrylat oder Tetraethylenglycoldiacrylat vernetzt ist.

18. Verwendung einer Membran nach einem oder mehreren der Ansprüche 1 bis 9, dadurch **gekennzeichnet**, dass das Polyacrylsäure-oder methacrylsäurederivat ein Polyacrylamid oder -methacrylamid ist.

19. Verwendung einer Membran nach Anspruch 18, dadurch **gekennzeichnet**, dass das Polyacrylamid oder -methacrylamid vernetzt ist.

20. Verwendung einer Membran nach Anspruch 19, dadurch **gekennzeichnet**, dass das Polyacrylamid oder -methacrylamid mit einem bifunktionalen Acrylamid oder Methacrylamid vernetzt ist.

21. Verwendung einer Membran nach einem oder mehreren der vorhergehenden Ansprüche, dadurch **gekennzeichnet**, dass die Porengrösse der Membran im Bereich zwischen 0,1 und 1,2 $\mu$m liegt.

22. Verwendung einer Membran nach einem oder mehreren der vorhergehenden Ansprüche, dadurch **gekennzeichnet**, dass die Porengrösse der Membran 0,2 bis 0,8 $\mu$m, insbesondere 0,45 bis 0,65 $\mu$m beträgt.

23. Verwendung einer Membran nach einem oder mehreren der vorhergehenden Ansprüche, dadurch **gekennzeichnet**, dass das Hohlvolumen der Membran (Porosität) 65 % oder mehr beträgt.

24. Verwendung einer Membran nach einem oder mehreren der vorhergehenden Ansprüche, dadurch **gekennzeichnet**, dass die Wasserdurchflussrate bei 20 °C und bei einem Differenzdruck von 0,7 bar im Bereich von 2,5 bis 200 ml/min cm$^2$, bevorzugt zwischen 25 und 70 ml/min cm$^2$, liegt.

25. Verwendung einer Membran nach einem oder mehreren der vorhergehenden Ansprüche, dadurch **gekennzeichnet**, dass der Bubble-Point mit Wasser 0,5 bis 5,0 bar, bevorzugt 0,9 bis 2,0 bar, beträgt.

26. Verwendung einer Membran nach einem oder mehreren der vorhergehenden Ansprüche, dadurch **gekennzeichnet**, dass die Membran einen Porendurchmesser von 0,45 bis 0,65 $\mu$m, eine Porosität von grösser gleich 65 %, einen Wasserdurchfluss von 25 bis 70 ml/min cm$^2$ (Druck: 0,7 bar, Temperatur: 20 °C), und einen Bubble-Point mit Wasser von 0,90 bis 2,0 bar aufweist.

27. Verwendung einer Membran nach einem oder mehreren der vorhergehenden Ansprüche, dadurch **gekennzeichnet**, dass die Dicke der Membran 50 bis 300 $\mu$m, bevorzugt 80 bis 180 $\mu$m, beträgt.

28. Verwendung einer Membran nach einem oder mehreren der vorhergehenden Ansprüche, dadurch **gekennzeichnet**, dass das Flächengewicht der Membran im Bereich von 3 bis 12 mg/cm$^2$, bevorzugt zwischen 6,5 und 9,5 mg/cm$^2$, liegt.

29. Verwendung einer Membran nach einem oder mehreren der vorhergehenden Ansprüche, dadurch **gekennzeichnet**, dass die Membran gegen alkalische Hypochloritlösung (pH-Wert 8-9,5) resistent ist.

30. Verwendung einer Membran nach einem oder mehreren der vorhergehenden Ansprüche, dadurch **gekennzeichnet**, dass der aus der Membran mit Wasser extrahierbare Anteil weniger als 0,5 Gew.%, beträgt.

31. Verwendung einer Membran nach einem oder mehreren der vorhergehenden Ansprüche, dadurch **gekennzeichnet**, dass die Membran zur mechanischen Stabilisierung mit Stützmaterial versehen werden kann und als Flachfilter (Scheibenfilter, Kerzenfilter mit gewickelter oder plissierter Membran, Plattenfilter, dynamischer Druckfilter) oder als Rohr-bzw. Kapillarfilter ausgebildet ist.

32. Verwendung einer Membran nach einem oder mehreren der vorhergehenden Ansprüche, dadurch **gekennzeichnet**, dass die Membran erhältlich ist, indem man zunächst das polymere Substrat wäscht, um die Oberfläche der Poren zu benetzen, und dann das Substrat mit einer Lösung, die ein Polyacrylsäure- oder -methacrylsäurederivat, einen Polymerisationsinitiator für das Acrylsäure- oder -methacrylsäurederivat und gegebenenfalls einen Vernetzer enthält, unter Bedingungen kontaktiert, bei denen das Acrylsäure- oder -methacrylsäurederivat polymerisiert und gegebenenfalls vernetzt wird, und das erhaltene, gegebenenfalls vernetzte Polyacrylsäure-oder -methacrylsäurederivat die Oberfläche des Substrates überzieht, ohne dessen Poren zu verstopfen.

33. Verwendung einer Membran nach Anspruch 32, dadurch **gekennzeichnet**, dass der Polymerisationsinitiator ein Persulfat ist.

34. Verwendung einer Membran nach Anspruch 33, dadurch **gekennzeichnet**, dass das Persulfat Ammoniumpersulfat ist.

35. Verwendung einer Membran nach Anspruch 32, dadurch **gekennzeichnet**, dass der Polymerisationsinitiator eine Azo-Verbindung ist.

36. Verwendung einer Membran nach Anspruch 32, dadurch **gekennzeichnet**, dass der Initiator eine Peroxy-Verbindung darstellt.

37. Verwendung einer Membran nach Anspruch 32, dadurch **gekennzeichnet**, dass das Polyacrylsäure-oder -methacrylsäurederivat ein Polyhydroxyalkylacrylat oder -methacrylat darstellt, der Polymerisationsinitiator durch Ammoniumpersulfat und der Vernetzer durch Tetraethylenglycoldiacrylat gegeben ist.

FIG. 1

_Versuchsanordnung_ zur Bestimmung des maximalen Filterdurchflußvolumens

Verschlußstopfen
Quetschklemme
Druckfiltrationsgerät
Schouglos
Membran
Quetschklemme
Meßzylinder
Container
$CO_2$-Flasche

Fig. 2

ENTLÜFTUNGSVENTIL

SCHAUGLAS

VORFILTERKERZE

MEMBRANFILTER-
KERZE

ELEKTR. REGLER

FILTERGEHÄUSE

FREQUENZGEREGELTE
PUMPE

INDUKTIVER
DURCHFLUßMESSER

ELEKTR. DRUCKMEßUMFORMER

EP 0 392 395 A1

EP 0 392 395 A1

Fig.3.a

Fig.3.b

Fig.3.c

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| P,X | DERWENT ACCESSION NO. 90-025 181, Questel Tele-systems (WPIL) DERWENT PUBLICATIONS LTD., London<br>* Abstract *<br>& JP-A-1 270 906 (GESSNER)<br>-- | 1-3,9, 21 | B 01 D 71/40<br>C 12 H 1/00<br>C 12 C 9/08 |
| D,A | EP - A2 - 0 186 758 (MILLIPORE)<br>* Ansprüche; Seite 6, Zeilen 11-25; Seite 5, Zeilen 7-10 *<br>-- | 1, 4-16, 18-21, 32-37 | |
| A | DERWENT ACCESSION NO. 82-39 915, Questel Tele-systems (WPIL) DERWENT PUBLICATIONS LTD., London<br>* Abstract *<br>& JP-A-57 057 727 (UNITIKA)<br>---- | 1,32 | |

| | RECHERCHIERTE SACHGEBIETE (Int Cl⁵) |
|---|---|
| | B 01 D<br>C 12 M<br>C 12 C |

Der vorliegende Recherchenbericht wurde für alle Patentansprüche erstellt.

| Recherchenort<br>WIEN | Abschlußdatum der Recherche<br>16-07-1990 | Prüfer<br>BECKER |
|---|---|---|

EPA Form 1503 03 82